# EUROPEAN PATENT SPECIFICATION

(11) **EP 2 655 844 B1**
(45) Date of publication and mention of the grant of the patent: **25.03.2015**
(21) Application number: 10812812.5
(22) Date of filing: 21.12.2010
(51) Int. Cl.: F02M 21/06, G05D 16/10

(54) **VAPORIZER AND PRESSURE REDUCER DEVICE IN SELF-PROPULSION GAS SYSTEMS**
VERDAMPFER UND DRUCKREGLERVORRICHTUNG IN GASGETRIEBENEN SYSTEMEN
VAPORISEUR ET DISPOSITIF RÉDUCTEUR DE PRESSION DANS DES SYSTÈMES À GAZ À AUTOPROPULSION

(43) Date of publication of application: 30.10.2013
(73) Proprietor: Emer S.p.a., 25135 Brescia (IT)
(72) Inventor: DEFILIPPI, Roberto, I-10155 Torino (IT); FRANZONI, Paolo, I-25124 Brescia (IT); NOVENTA, Francesco, I-25082 Botticino Brescia (IT)
(74) Representative: Chimini, Francesco
(86) International application number: PCT/IT2010/000507
(87) International publication number: WO 2012/085949

(56) References cited:
- EP-A2- 1 382 830
- EP-A2- 1 926 008
- DE-A1-102004 057 466

## Description

### Field of the invention

The present invention relates to a gasifier/pressure reducer device in self-propulsion systems with gas-fuelled engine, particularly LPG (liquid petroleum gas).

The installation of transformation systems in motor vehicles able to fuel said motors also by means of liquid petroleum gas, thereby creating a mixed fuel system, has been known for some time. The systems of the known type are generally composed of a tank of gas in a liquid state, a gasifier/pressure regulator which transforms the LPG into a gaseous state at the right pressure for fuelling the engine, and of a series of ducts and relative accessories for facilitated filling of the tank and for optimal functioning of the entire system.

### State of the art

As is well known to experts in the sector, the pressure regulator is an essential element of a system for gas fuelled engines. The pressure regulator must ensure the supply of the gas fuel in the required quantity and at the required pressure. In particular, it must:
- keep constant the output pressure from the pressure regulator both in the face of gradual pressure variations of the input pressure, and sudden variations;
- block the supply of fuel, for example by means of a shut-off valve, when no demand for fuel is made by the engine;
- ensure sensitivity and a rapid supply upon demand from the engine.

The sensitivity and precision of the pressure regulator are fundamental for proper functioning of the fuel system of an injection engine, it being necessary to carefully dose the amount of fuel supplied to the engine.

One stage, two stage and three stage reduction pressure regulators having an elastic membrane are known of. Such regulators comprise a first stage which comprises a first chamber communicating with the fuel tank by means of a first valve, a part of the inner surface of the first chamber being formed of a first elastic membrane. As the first stage, the subsequent stages also comprise a chamber where a part of the inner surface is formed of an elastic membrane. Between the stages there is generally a heat exchange area between the fluid and heating gas.

The gasifiers/pressure regulators thus conceived present various drawbacks. First of all, during the start phase of the system harmful overpressure is probable in the injector rail due to the fact that the communication duct of the pressurised gas is typically a very narrow duct, such as not to allow an immediate pressure compensation to be achieved in the regulation chamber. The reduced diameter of the communication duct of the gas under pressure is however needed to protect the elastic membrane from breakage and is therefore a typical characteristic of the regulators/gasifiers using said element.

Another problem of the traditional regulator with membrane is that it cannot guarantee a sufficiently constant response of the regulated pressure throughout the excursion of the membrane. The latter, in fact, has a greater rigidity in its point of greatest excursion, a consequence which is accentuated in applications with a reduced membrane diameter (miniaturised regulators).

A further drawback of the traditional elastic membrane regulators is that, from a point of view of robustness and reliability, their performance is reduced in latest generation injection systems where, typically, decidedly serious overpressure, pulsations, cut-offs occur, so much so that a traditional membrane regulator is unable to compensate rapidly. With these reducers, especially in relation to large and rapid requests by the user, reduced sensitivity and speed of supply to the engine requirements may result.

A further drawback of the membrane regulators is the need of maintenance; in fact the extreme fluid-dynamic conditions which the membrane is subjected to greatly limit its duration obliging its replacement after a certain mileage of the vehicle and/or making a manual recalibration of the regulation pressure necessary.

A further drawback of the membrane vaporisers/regulators is that they are generally of a significant size and weight making them inconvenient for installation in the vehicle.

Document US 6 044 825 A discloses a pressure reducer having a diaphragm and two stages. During cold conditions one of the stages is inactive such that the reducer can perform as a one stage device.

Document DE 10 2004 057 466 A1 already proposes to use a piston type pressure reducer to regulate the pressure in the fuel supply of a vehicle engine.

### Purpose of the invention

The purpose of the present invention is to make a gasifier/pressure regulator able to resolve at least partially the problems mentioned above. In particular, the task of the present invention is to:
- prevent overpressure in the injector rail during the start phase of the system;
- increase reliability and resistance to overpressure, cut-offs, pulsations caused by the latest generation systems;
- increase performance in terms of constancy of the regulated pressure throughout the excursion of the mobile element;
- avoid costly servicing operations;
- provide a device easy and convenient to install, and therefore having a reduced size and weight.

Said purposes are achieved, according to claim 1, by a gasifier/pressure reducer device comprising a main body, in which an entrance passage of a fluid communicating with a tank of pressurised fluid and an exit passage of the gas at the required pressure, connected to a utility, shut-off devices of the fluid joined to the entrance passage, a gasifier circuit made in a first portion of said body and comprising a heat exchanger able to transform, in a gasification duct, the fluid entering into a gaseous state suitable to fuel the engine, and a single regulator stage of the pressure of the gas supplied housed in a second portion of the main body, downstream of the gasification circuit, are made.

The regulator stage comprises a piston pressure regulator, wherein the piston is translatable in a respective piston seat made in said second portion of the main body being subjected to a frontal thrust exerted by the gas present in the exit passage and to a rear thrust exerted by an elastic contrast device calibrated depending on the desired output pressure.

An obturator body of a valve seat placed between the gasification duct and the exit passage of the gas is operatively connected to the piston in such a way that said obturator body opens or closes said valve seat depending on the pressure value of the gas present in the exit duct and acting on the piston.

Thanks to the use of a piston pressure regulator, the duct which the pressurised gas flows in can be made with a diameter such as to immediately compensate the pressure in the regulation chamber (to be more precise the front chamber of the piston seat), achieving rapid closure of the obturator and preventing harmful overpressure in the injector rail during the start phase of the system.

A piston regulator further ensures a sufficiently constant response of the regulated pressure throughout the excursion of the piston.

Thanks to such characteristics, a piston regulator ensures a more rapid and sensitive response to the engine demand and greater robustness and reliability in the latest generation injection systems in which pulsations, overpressure and cut-offs occur.

In addition, the regulation piston does not require replacement after a certain mileage of the vehicle, thereby avoiding servicing operations. Furthermore, it guarantees high and practically constant performance over time with variations of the output pressure equal to a maximum of 3% after a mileage of 100,000 km of the vehicle at the same environmental conditions.

The piston requires less space for housing than the membrane, and thereby makes it possible to realise a smaller, lighter gasifier/regulator.

### Brief description of the drawings

The invention will be easier to comprehend from the following description of one its embodiments given purely by way of example. In such description reference will be made to the attached indicative and non-limiting drawings, wherein:
Figure 1 shows a side view of the pressure regulator/gasifier device according to the invention;
Figure 2 is a plan view from above of the device;
Figure 3 is an end view of the device;
Figure 4 is a longitudinal section of the device along the line A-A in Figure 3;
Figure 5 is a table showing a comparison, in terms of pressure of the output gas, of the device according to the invention ("R.Piston Emer") and the main membrane regulators present on the market; from this table the stability of the output pressure of the invention is clear, the pressure variations (DeltaP) being lower than the elastic membrane regulators; and
Figure 6 is a table showing a comparison, in terms of temperature, of the device according to the invention ("R.Piston Emer") and the main membrane regulators present on the market. In the toughest conditions the temperature of the output gas is higher than the membrane regulators, thereby ensuring that no re-liquefaction of the gas causing serious carburation problems can occur. Said table also shows the efficiency of the exchanger, the difference of input and output temperature being greater than in the membrane regulators.

### Detailed description of the invention

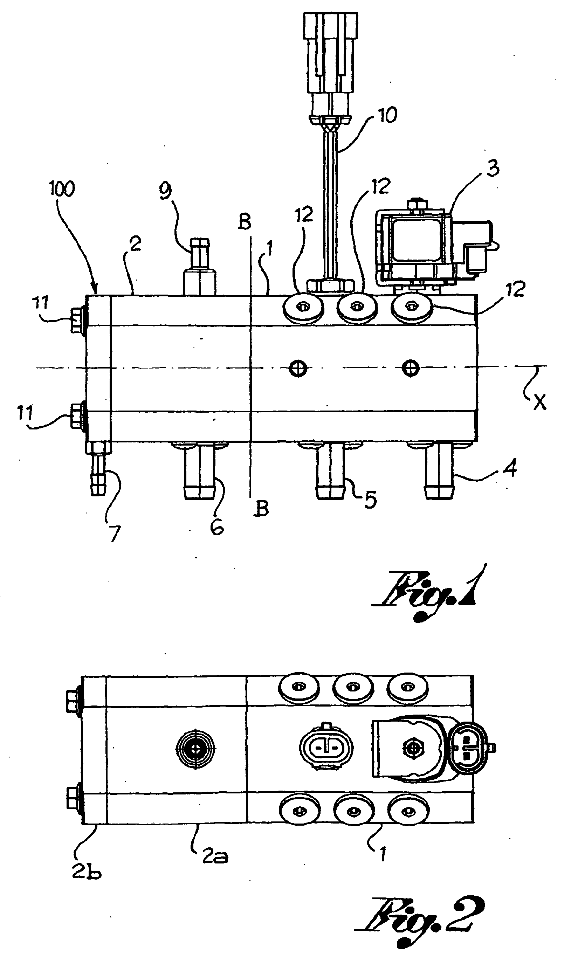

As shown, the device herein proposed comprises a main body 100 which extends mainly along a main axis X and which is obtained by coupling at least a first portion 1, the gasifier, and a second portion 2, the pressure regulator (the separation line of which is shown by B-B in figure 1). The body 100 has an overall parallelepiped shape and is in any case very compact.

An entrance passage 8 is made in the first portion 1 which is connected to a tank of pressurised gas, not shown, preferably in a liquid state; in the second portion an exit passage 6 is made which is connected to a utility, for example by means of a connector attached to the body with the interposition of a sealing gasket 38.

In one embodiment, the second portion 2 of the body 100 is formed of a main part 2a and a closing bottom plate 2b. The three parts of the body 1, 2a, 2b are assembled in a sandwich by means of screws 11.

The first portion 1 mainly performs the function of gasification and is therefore called gasifier; such first portion 1 is substantially in a single piece and bears or houses part of the functional elements of the device which, in the example shown, include a solenoid valve, a gasification circuit, a through circuit of the water and a temperature sensor.

The second portion 2 mainly performs the function of regulating the pressure and therefore comprises at least one regulator stage of the pressure. In one embodiment, as well as said regulator stage said second portion 2 also comprises at least one overpressure valve 9 and in addition a connector 7 destined for coupling with the intake manifold of the engine.

The entrance passage 8 communicates with a storage chamber 16 made at the entrance of a solenoid valve 3 able to intercept the flow of incoming fluid. Between the entrance passage 8 and the storage chamber 16 there may be a filter which is therefore upstream of all the functional components of the device to protect them from the entrance of harmful impurities or solid particles.

The solenoid valve 3 has a threaded connector 14 which screws onto the first portion 1 of the body with the interposition of a sealing gasket 15. The solenoid valve 3 comprises a control piston 19 bearing an obturator 23. This latter is guided axially and is associated with a conical seat 24 on which it acts in closure. The control piston 19 is housed and is axially movable in the nucleus of the electromagnet of the solenoid valve. A contrast spring 20 is associated with the control piston 19 and tends to push it normally into a closed position with the sealing gasket on the conical seat 24.

The solenoid valve 3 is such that when the electromagnet is dis-excited the contrast spring 20 keeps the control piston 19 in the closed position, thereby intercepting the flow of fluid coming from the tank. The solenoid valve 3 can only be opened by powering the electromagnet. The control piston 19 thus shifts backwards and opens the conical seat 24.

The conical seat 24 associated with the solenoid valve 3 places the storage chamber 16 in communication with an interception duct 17. When said conical seat 24 opens, the fluid which has collected in the storage chamber 16 communicating with the entrance passage 8 flows out into the interception duct 17. Said interception duct 17 empties into a gasification duct 18. The latter has a significantly greater volume than the interception duct 17 so as to allow a rapid expansion of the gas in a liquid phase. Such volumetric difference at the high temperature of the duct allows the complete transformation of the state of LPG into a gaseous phase.

For example, the interception duct 17 has a diameter of 1mm to 4mm. The ratio of the diameter of the gasification duct 18 to the diameter of the interception duct 17 is 2 to 6.

The exit of the gasification duct 18 communicates with an obturator seat 21 in which an obturator body 27 is placed and slides. For example, said obturator body slides along or parallel to the main axis X of the device body.

The obturator body 27 is operatively connected to a pressure regulator piston 29, housed so as to slide in a respective piston seat 32, 33 made in the second portion 2 of the main body 100. For example, even said regulator piston 29 slides along or parallel to the main axis X of the main body 100 of the device. In particular, in a preferred embodiment, the obturator body 27 and the regulator piston 29 are coaxial to each other. In one embodiment, the obturator body 27 and the regulator piston 29 are mechanically connected by a calibrated connection pin 36.

The regulator piston 29 divides the piston seat 32, 33 into a front chamber 32 and a rear chamber 33. In the rear chamber 33 a contrast spring 30 which tends to push the piston into a forward position, that is towards the obturator body 27, is housed. Said contrast spring 30 is calibrated depending on the desired output pressure of the gas.

The front chamber 32 is also called the compensation chamber in that it is the one in which the gas acts on the piston so that the latter finds itself, at the desired gas output pressure, in equilibrium with the contrast spring 30.

Between the obturator seat 21 of the obturator body 27 and the front chamber 32 of the regulator piston seat 29 there is a gas output chamber 31 made in the second portion 2 of the main body. Said output chamber 31 communicates both with the obturator seat 21, through a valve seat 27' controlled by -the obturator body 21, and with the front chamber 32 of the regulator piston seat 29, through a regulation passage 35. Such exit chamber 31 flows out in the exit passage 6.

In conditions of non-functioning of the device, the valve seat 27' between the obturator seat 21 and the exit chamber 31 is open in that the regulator piston 29 is kept in the forward position by the force of the contrast spring 30, in other words in contact with the wall defining the front chamber 32. The piston 29 can move axially inside its seat 32, 33 guided by dedicated sliding clamps 34 in self-lubricating material. In order to prevent the gas from freely flowing from the front chamber 32 to the rear chamber 33, a lip-packing seal 37 is fitted around the piston 29.

In one embodiment, the obturator body 27 is sustained in its movement by a force exerted by a contrast spring 26 which is housed in the obturator seat 21, preferably made in the first portion 1 of the device body. In a non-functioning condition of the device, the obturator body 27 does not find itself in the closed position, in other words is detached from its valve seat 27', being pushed into a rearward position (in relation to the valve seat 27') by the regulator piston 29, which is rather in an advanced position as a result of the effect of the contrast spring 30. In this condition, the obturator body 27 allows the gas to flow from the obturator seat 21 to the exit chamber 31 connected with the exit passage 6 and with the front chamber 32 of the piston seat.

Consequently, upon starting the device, the gas passes from the obturator seat 21 to the exit chamber 31 and from here, through the regulator passage 35, to the front chamber 32. The gas accumulates in said front chamber 32 moving the regulator piston towards the rearward position, until a pressure equilibrium is reached with the force of the spring 30, suitably dimensioned so as to supply in output the desired pressure. In this condition of equilibrium, the regulator piston 29 finds itself in an intermediate position inside its seat; consequently the obturator body 27 too, which the sealing gasket 28 is fitted on, moves towards the forward position, closing the valve seat 27'.

Such kinematic motion of the mobile parts allows to find the right gap between the obturator body 27 and the relative sealing valve seat 27', thereby ensuring the flow of gas at constant pressures needed to fuel the engine throughout its functioning range.

In one embodiment, the ratio between the charges dispensed by the contrast springs 30 and 26 of the piston 29 and the obturator body 27 is equal to 13 ± 40%.

The ratio between the diameter of the piston 29 and the diameter of the sealing valve seat 27' of the obturator 27 is equal to the value 8 ± 3.

The piston 29 may be of lightweight alloy or reinforced techno-polymer to reduce its relative weight, thereby the inertia and consequently increase the dynamicity of the system. Said materials ensure excellent performance of the regulator installed in vehicles with turbo engines which require rapid supply variations of the regulator, which could cause breakage of less resistant materials such as those used for elastic membranes.

The piston regulation principle ensures elevated closure dynamics, required in particular in vehicles with turbo engines. Said dynamics are achieved in part thanks to the reduced volume of the compensation chamber 32 which is affected by the movement of the regulator device. For example, such chamber 32 has a volume equal to the diameter of the piston 29 multiplied by 1/14±1/22 of said diameter. In one embodiment, the regulator duct 35 placing said chamber in communication with the exit chamber 31 has a diameter equal to 1.5 ± 1mm.

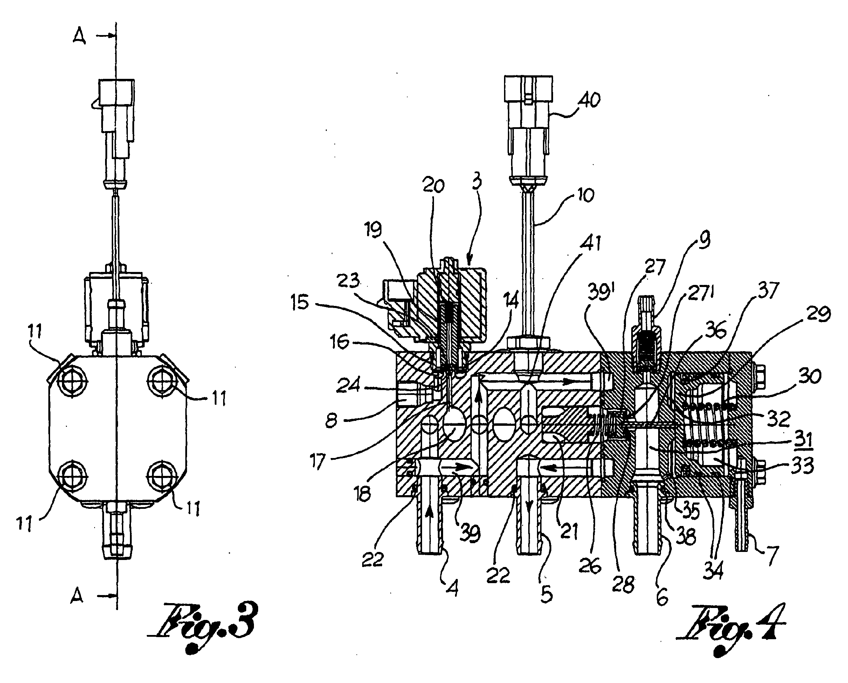

In the first portion 1 of the main body 100, in addition to the gasification duct 18 of the fluid, there is a heating duct 39 which a heating fluid, as example water/glycol 39, flows through. Said heating fluid flows between an entrance connector 4 and an exit connector 5, following for example the direction of the arrows in Fig. 4 (or an opposite direction), ensuring the heating of the gasifier.

The entrance connector 4 and exit connector 5 are attached to the main body 100 with the interposition of respective sealing gaskets 22. The heating duct 39 is made so as to "crossover" with the gasification duct 18, ensuring homogeneity of heating and thereby greater efficiency of the heat exchange; it should be emphasised that such heat diffusion ensures that the fluid reaches the obturator seat 21 in a completely gaseous state.

In one advantageous embodiment, a temperature sensor 10 with connector 40 is positioned in the first portion 1 of the body so as to monitor the temperature of the heating fluid by means of a sensitive element embedded in the heating duct 39. Such information on the temperature of the water is needed since it determines the minimum level of efficiency of the gasifier enabling complete gasification inside the gasification duct 18 to be guaranteed.

At the junction between the gasifier and the regulator stage, in other words between the first and second portions of the main body, the heating duct 39 forms a toroidal section 39' able to adequately transmit heat also to the second portion 2 of the body, in other words to the pressure regulator, thereby avoiding the possibility that the temperature of the gas falls excessively causing subsequent liquefaction.

It should be noted that the heat exchanger can be modulated in its heat exchange acting on its length and on the number of channels crossed, so as to be programmed to the various requirements of the vehicle engine which it is installed on. The heat exchanger ducts are positioned so that they form in their circuits, angles of 45°±20° ensuring greater efficiency of the heat exchange, fundamental for the complete gasification of the fluid. For example, it has been found that the difference in temperature between the input and output water is equal to 10 ± 6°C

In one embodiment, the gasification duct 18 has a toroidal part at a distance from the junction between the portions of body 1 and 2 of 0mm to 30mm. The obturator body and the relative sealing seat are coaxial, with an uncertainty of 2 mm ± 30%, with the toroidal section 39' of the water/glycols.

Advantageously, an overpressure valve 9 may be placed in connection with the exit chamber 31 that is to say in connection with the exit of the pressure regulator, to protect the devices downstream of the device, in particular the injectors.

The connector 7 connected to the bottom closure plate 2b of the body is able to place the rear chamber 33 of the regulator piston seat in fluidic communication with the manifold intake of the engine. Said connection ensures the correct pressure value of the gas supplied with reference to the pressure/negative pressure present in the intake manifold of the engine.

Substantially, the fluid coming from a tank flows to the device through the entrance passage and, when the solenoid valve is opened upon command, flows into the gasification duct, in which it passes to the gaseous state. The gas then passes to the pressure regulator by means of which its pressure is regulated to the desired value for the correct fuelling of the engine downstream.

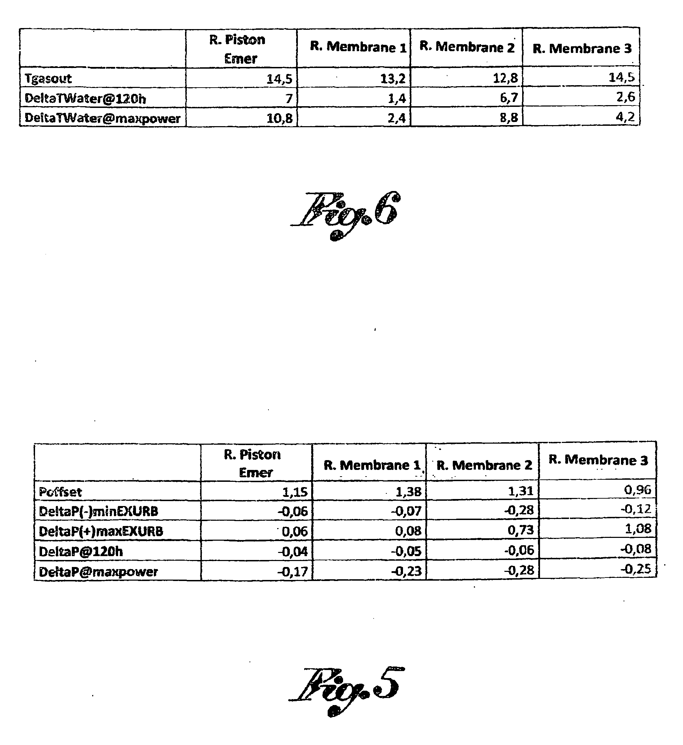

Figures 5 and 6 show a comparison of the performance of the regulator which the present invention relates to and the main membrane regulators present on the market. The data were acquired covering a mixed urban road - highway circuit so as to reflect as varied a range as possible of driving conditions.

Figure 5 shows the stability of output pressure: the negative and positive pressure variations (DeltaP) of the regulator according to the invention are lower, in absolute terms, than those of the regulator with elastic membranes.

Figure 6 shows the elevated efficiency of the heat exchanger of the device according to the present invention. In the toughest conditions for functioning of the device, namely at the maximum power demand, the temperature of the gas in output is higher than that of the gas in output from membrane regulators/vaporisers and higher than the limit which would entail failure to vaporise the fluid. This ensures that no re-liquefaction phenomena of the gas can occur, as happens on occasion with regulators of the traditional type with a membrane, causing serious carburation anomalies of the engine.

The efficiency of the heat exchanger is also evident from the temperature difference (DeltaTwater in Figure 6) of the water from the entrance of the duct 4 to the exit 5. A greater difference of temperature means that a greater quantity of heat has been yielded by the heating fluid to the fuelling fluid, entailing the desired evaporation.

## Claims

1. Gasifier/pressure reducer device for self-propulsion systems with gas-fuelled motor, particularly LPG, comprising:
- a main body (100), in which an entrance passage (8) of a fluid communicating with a tank of fluid under pressure and an exit passage (6) of the gas at the required pressure, connected to a utility, are made,
- a shut-off device (3) of the fluid associated to the entrance passage (8);
- a gasification circuit made in a first portion (1) of said body (100) and comprising a heat exchanger (38) able to transform, in a gasification duct (18), the fluid entering, to a gaseous state suitable to fuel the engine;
- a single regulator stage of the pressure of the gas supplied housed in a second portion (2) of the main body (100), downstream of the gasification circuit, said regulator stage comprises a piston pressure regulator, wherein the piston (29) is translatable in a respective piston seat (32, 33) made in said second portion (2) of the main body (100) being subjected to a frontal thrust exerted by the gas present in the exit passage (6) and to a rear thrust exerted by an elastic contrast device (30) calibrated depending on the desired output pressure; an obturator body (27) of a valve seat (27) placed between the gasification duct and the exit passage (6) of the gas being operatively connected to the piston (29) in such a way that said obturator body (27) opens or closes said valve seat (27') depending on the pressure value of the gas present in the exit duct and acting on the piston.

2. Device according to claim 1, wherein, if the pressure of the gas in the exit passage (6) is below a predefined value, the piston (29) is thrust by the elastic element (30) into a forward position in which it commands the obturator body (27) to open the valve seat (27'), and wherein, if the pressure of the gas in the exit passage (6) is above the predefined value, the piston (29) is thrust by the pressure of the gas into a rearward position which enables the obturator body (27) to close the valve seat (27').

3. Device according to claim 2, wherein the obturator body (27) is translatable in a respective obturator seat (21) communicating with the gasification duct (18) and coaxial to the piston seat, and is influenced by an elastic contrast device (26) to close the valve seat.

4. Device according to claim 3, wherein the obturator body (27) is mechanically connected to the piston by a connection pin (36).

5. Device according to any of the previous claims, wherein the rear chamber (33) of the piston seat is in fluidic communication with the manifold intake of the engine.

6. Device according to any of the previous claims, wherein the shut-off means (3) are placed along an interception duct (17) which connects the entrance passage (8) with the gasification duct (18), and wherein said gasification duct (18) has a significantly greater volume than that of said interception duct (17) so as to allow the expansion of the incoming fluid to the gaseous phase.

7. Device according to any of the previous claims, wherein the heat exchanger comprises a duct (39) for a heating fluid made in the first portion of the body and crossing the gasification duct (18) at least once.

8. Device according to claim 7, wherein between the gasification circuit and the regulator stage the heating fluid duct (39) forms a toroidal section (39') so as to transmit its heat to the regulator stage too.

9. Device according to claim 8, wherein the obturator body (27) and the relative valve seat (27') are coaxial to said toroidal section (39') of the duct (39) for the heating fluid.

10. Device according to any of the previous claims, wherein the valve devices comprise at least one electro valve (3) attached to the main body.

11. Device according to any of the previous claims, wherein the main body (100) is formed of a least two parts assembled to each other and corresponding respectively to the first (1) and second portion (2) of said body.

12. Device according to claim 11, wherein the main body (100) comprises a bottom plate which closes the piston seat (32) at the back and which bears a connector (7) for the fluidic communication of the rear chamber (33) of said seat with the manifold intake of the engine.

13. Device according to any of the previous claims, wherein a protective filter of all the downstream devices is joined to the entrance passage (8).

14. Device according to any of the previous claims, further comprising at least one overpressure valve (9) joined to the exit passage.

15. Device according to any of the claims 6-14, wherein the interception duct (17) has a diameter of 1 mm to 4 mm.

16. Device according to any of the claims 6-15, wherein the ratio of the diameter of the gasification duct (18) to the diameter of the interception duct (17) is 2 to 6.

## Patentansprüche

1. Vergaser/Druckmindervorrichtung für Selbstantriebsvorrichtungen mit gasbetriebenem Motor, insbesondere LPG, umfassend:
- einen Hauptkörper (100), in dem ein Eingangsdurchgang (8) für eine Fluidverbindung mit einem Tank für druckbeaufschlagtes Fluid und ein Ausgangsdurchgang (6) für das Gas mit dem geforderten Druck, verbunden mit einer Versorgung, gestaltet sind,
- eine dem Eingangsdurchgang (8) zugeordnete Absperrvorrichtung (3) für das Fluid;
- eine Vergaserschaltung, die in einem ersten Bereich (1) des Körpers (100) ausgebildet ist und einen Wärmetauscher (38), der ausgebildet ist, um in einem Vergaserkanal (18) das einströmende Fluid in einen zum Befüllen des Motors geeigneten gasförmigen Zustand zu überführen, aufweist;
- eine einzelne Reglerstufe für den Druck des bereitgestellten Gases, die in einem zweiten Bereich (2) des Hauptkörpers (100) stromabwärts der Vergaserschaltung angeordnet ist, wobei die einzige Reglerstufe einen Kolbendruckregler aufweist, wobei der Kolben (29) in einen in dem zweiten Bereich (2) des Hauptkörpers (100) ausgebildeten jeweiligen Kolbensitz (32, 33) unter Aussetzung eines durch das im Ausgangsdurchgang (6) befindliche Gas ausgeübten Vorschubs und eines durch eine elastische Gegenvorrichtung, die abhängig vom geforderten Ausgangsdruck eingestellt ist, ausgeübten Rückschubs übertragbar ist; ein Verschlusskörper (27) eines Ventilsitzes (27') ist zwischen dem Vergaserkanal und dem Ausgangsdurchgang (6) für das Gas angeordnet und ist mit dem Kolben (29) derart wirkverbunden, dass der Verschlusskörper (27) den Ventilsitz (27') abhängig vom Druckwert des sich im Ausgangsdurchgang befindlichen und auf den Kolben wirkenden Gases öffnet oder schließt.

2. Vorrichtung nach Anspruch 1, wobei der Kolben (29), wenn der Gasdruck im Ausgangsdurchgang (6) unterhalb eines vorgegebenen Wertes ist, durch das elastische Element (30) in eine vordere Position gedrückt wird, in welcher er den Verschlusskörper (27) zum Öffnen des Ventilsitzes (27') auffordert, und wobei der Kolben (29), wenn der Gasdruck im Ausgangsdurchgang (6) oberhalb des vorgegebenen Wertes ist, durch den Gasdruck in eine hintere Position, die dem Verschlusselement (27) das Schließen des Ventilsitzes (27') ermöglicht, gedrückt wird.

3. Vorrichtung nach Anspruch 2, wobei das Verschlusselement (27) in einen entsprechenden mit dem Vergaserkanal (18) verbundenen Verschlusssitz (21) übertragbar ist und koaxial zum Kolbensitz ist und durch eine elastische Gegenvorrichtung (26) zum Schließen des Ventilsitzes beeinflusst ist.

4. Vorrichtung nach Anspruch 3, wobei das Verschlusselement (27) mit dem Kolben über einen Verbindungsstift (36) mechanisch verbunden ist.

5. Vorrichtung nach einem der vorherigen Ansprüche, wobei die Hinterkammer (33) des Kolbensitzes mit dem Krümmereinlass des Motors in flüssigkeitsleitender Verbindung steht.

6. Vorrichtung nach einem der vorherigen Ansprüche, wobei die Absperrmittel (3) entlang eines Überwachungskanals (17), der den Eingangsdurchgang (8) mit dem Vergaserkanal (18) verbindet, angeordnet sind, und wobei der Vergaserkanal (18) ein signifikant größeres Volumen als der Überwachungskanal (17) hat, um so die Expansion des einströmenden Fluids in den gasförmigen Zustand zu ermöglichen.

7. Vorrichtung nach einem der vorherigen Ansprüche, wobei der Wärmetauscher einen Kanal (38) für ein Wärmefluid aufweist, der im ersten Bereich des Körpers angeordnet ist und den Vergaserkanal (18) zumindest einmal kreuzt.

8. Vorrichtung nach Anspruch 7, wobei der Wärmefluidkanal (39) zwischen der Vergaserschaltung und der Reglerstufe einen toroidalen Abschnitt (39') bildet, um so seine Wärme auch auf die Reglerstufe zu übertragen.

9. Vorrichtung nach Anspruch 8, wobei das Verschlusselement (27) und der entsprechende Ventilsitz (27') koaxial zum toroidalen Abschnitt (39') des Kanals (38) für das Wärmefluid sind.

10. Vorrichtung nach einem der vorherigen Ansprüche, wobei die Ventilvorrichtung wenigstens ein am Hauptkörper angeordnetes Magnetventil (3) aufweist.

11. Vorrichtung nach einem der vorherigen Ansprüche, wobei der Hauptkörper (100) aus wenigstens zwei miteinander verbundenen und mit dem ersten (1) und dem zweiten Bereich (2) des Körpers entsprechend übereinstimmenden Teilen gebildet ist.

12. Vorrichtung nach Anspruch 11, wobei der Hauptkörper (100) eine Bodenplatte aufweist, die den Ventilsitz (32) an der Rückseite verschließt und einen Anschluss für die flüssigkeitsleitende Verbindung (7) der Hinterkammer (33) des Ventilsitzes mit dem Krümmereinlass des Motors trägt.

13. Vorrichtung nach einem der vorherigen Ansprüche, wobei ein Schutzfilter für alle stromabwärts angeordneten Vorrichtungen mit dem Eingangsdurchgang (8) verbunden ist.

14. Vorrichtung nach einem der vorherigen Ansprüche, weiterhin umfassend zumindest ein mit dem Ausgangsdurchgang verbundenes Überdruckventil (9).

15. Vorrichtung nach einem der Ansprüche 6-14, wobei der Überwachungskanal (17) einen Durchmesser von 1 mm bis 4 mm aufweist.

16. Vorrichtung nach einem der Ansprüche 6-15, wobei das Verhältnis des Durchmessers des Vergaserkanals (18) zum Durchmesser des Überwachungskanals (17) 2 bis 6 ist.

## Revendications

1. Gazéifeur/dispositif réducteur de pression pour des systèmes à autopropulsion avec un moteur à gaz, en particulier au GPL, comprenant :
- un corps principal (100), dans lequel un passage d'entrée (8) d'un fluide communiquant avec un réservoir de fluide sous pression et un passage de sortie (6) du gaz à la pression requise, relié à une installation, sont réalisés,
- un dispositif d'arrêt (3) du fluide associé au passage d'entrée (8) ;
- un circuit de gazéification réalisé dans une première portion (1) dudit corps (100) et comprenant un échangeur de chaleur (39) capable de transformer, dans un conduit de gazéification (18), le fluide entrant, en un état gazeux adapté pour alimenter le moteur en carburant ;
- un étage de régulateur unique de la pression du gaz fourni logé dans une seconde portion (2) du corps principal (100), en aval du circuit de gazéification, ledit étage de régulateur comprend un régulateur de pression de piston, dans lequel le piston (29) est translatable dans un siège de piston respectif (32, 33) réalisé dans ladite seconde portion (2) du corps principal (100) qui est soumis à une poussée frontale exercée par le gaz présent dans le passage de sortie (6) et à une poussée arrière exercée par un dispositif de rappel élastique (30) étalonné selon la pression de sortie souhaitée ; un corps d'obturateur (27) d'un siège de vanne (27') placé entre le conduit de gazéification et le passage de sortie (6) du gaz étant raccordé opérationnellement au piston (29) de manière à ce que ledit corps d'obturateur (27) ouvre ou ferme ledit siège de vanne (27') selon la valeur de pression du gaz présent dans le conduit de sortie et agissant sur le piston.

2. Dispositif selon la revendication 1, dans lequel, si la pression du gaz dans le passage de sortie (6) est inférieure à une valeur prédéfinie, le piston (29) est poussé par l'élément élastique (30) dans une position vers l'avant dans laquelle il commande au corps d'obturateur (27) d'ouvrir le siège de vanne (27'), et dans lequel, si la pression du gaz dans le passage de sortie (6) est supérieure à la valeur prédéfinie, le piston (29) est poussé par la pression du gaz dans une position vers l'arrière qui permet au corps d'obturateur (27) de fermer le siège de vanne (27').

3. Dispositif selon la revendication 2, dans lequel le corps d'obturateur (27) est translatable dans un siège d'obturateur (21) respectif communiquant avec le conduit de gazéification (18) et coaxial au siège de piston, et est influencé par un dispositif de rappel élastique (26) pour fermer le siège de vanne.

4. Dispositif selon la revendication 3, dans lequel le corps d'obturateur (27) est relié mécaniquement au piston par une tige de liaison (36).

5. Dispositif selon l'une quelconque des revendications précédentes, dans lequel la chambre arrière (33) du siège de piston est en communication fluidique avec l'admission de collecteur du moteur.

6. Dispositif selon l'une quelconque des revendications précédentes, dans lequel les moyens d'arrêt (3) sont placés le long d'un conduit d'interception (17) qui raccorde le passage d'entrée (8) au conduit de gazéification (18), et dans lequel ledit conduit de gazéification (18) a un volume nettement plus important que celui dudit conduit d'interception (17) de façon à permettre la détente en phase gazeuse du fluide entrant.

7. Dispositif selon l'une quelconque des revendications précédentes, dans lequel l'échangeur de chaleur comprend un conduit (39) pour un fluide chauffant réalisé dans la première portion du corps et croisant le conduit de gazéification (18) au moins une fois.

8. Dispositif selon la revendication 7, dans lequel, entre le circuit de gazéification et l'étage de régulateur, le conduit de fluide chauffant (39) forme une section toroïdale (39') de façon à transmettre sa chaleur également à l'étage de régulateur.

9. Dispositif selon la revendication 8, dans lequel le corps d'obturateur (27) et le siège de vanne relatif (27') sont coaxiaux à ladite section toroïdale (39') du conduit (39) pour le fluide chauffant.

10. Dispositif selon l'une quelconque des revendications précédentes, dans lequel les dispositifs de vanne comprennent au moins une électrovanne (3) fixée au corps principal.

11. Dispositif selon l'une quelconque des revendications précédentes, dans lequel le corps principal (100) est formé d'au moins deux parties assemblées l'une à l'autre et correspondant respectivement à la première (1) et à la seconde (2) portion dudit corps.

12. Dispositif selon la revendication 11, dans lequel le corps principal (100) comprend une plaque de fond qui ferme le siège de piston (32) à l'arrière et qui supporte un connecteur (7) pour la communication fluidique de la chambre arrière (33) dudit siège avec l'admission de collecteur du moteur.

13. Dispositif selon l'une quelconque des revendications précédentes, dans lequel un filtre protecteur de tous les dispositifs en aval est relié au passage d'entrée (8).

14. Dispositif selon l'une quelconque des revendications précédentes, comprenant en outre au moins une vanne de surpression (9) reliée au passage de sortie.

15. Dispositif selon l'une quelconque des revendications 6 à 14, dans lequel le conduit d'interception (17) a un diamètre de 1 mm à 4 mm.

16. Dispositif selon l'une quelconque des revendications 6 à 15, dans lequel le rapport du diamètre du conduit de gazéification (18) au diamètre du conduit d'interception (17) est de 2 à 6.
